**Europäisches Patentamt**

(19) **European Patent Office**

**Office européen des brevets**

(11) Numéro de publication: **0 104 977**

**B1**

(12) # FASCICULE DE BREVET EUROPÉEN

(45) Date de publication du fascicule du brevet:
04.11.87

(51) Int. Cl.⁴: **B 60 C 17/04**

(21) Numéro de dépôt: **83401723.8**

(22) Date de dépôt: **30.08.83**

(54) Nouveau dispositif de sécurité pour pneumatiques de véhicules ou autres engins.

(30) Priorité: **02.09.82 FR 8214998**

(43) Date de publication de la demande:
**04.04.84 Bulletin 84/14**

(45) Mention de la délivrance du brevet:
**04.11.87 Bulletin 87/45**

(84) Etats contractants désignés:
**AT BE CH DE GB IT LI LU NL SE**

(56) Documents cité:
**FR-A-1 596 932**
**FR-A-2 085 827**
**FR-A-2 396 664**
**FR-A-2 419 188**
**GB-A-2 022 032**
**US-A-3 250 310**

(73) Titulaire: **HUTCHINSON, 2 rue Balzac, F-75008 Paris
(FR)**

(72) Inventeur: **Hugele, Benoit, 168, Quai de Jemmapes,
F-75010 Paris (FR)**

(74) Mandataire: **Orès, Bernard, Cabinet ORES 6,
Avenue de Messine, F-75008 Paris (FR)**

EP 0 104 977 B1

## Description

La présente invention est relative à un nouveau dispositif de sécurité pour pneumatiques de véhicules, notamment pour pneumatiques sans chambre, qui permet, en cas de crevaison, de conserver toutes les caractéristiques du pneumatique, en particulier son adhérence et la stabilité de conduite du véhicule, sur une distance relativement importante d'au moins 50 kilomètres qui peut être parcourue à une vitesse raisonnablement élevée de 50 km/h.

Des dispositifs de sécurité pour pneumatiques de véhicules sont connus dans l'Art antérieur et sont constitués par une garniture en caoutchouc, généralement annulaire, disposée dans l'espace pneumatique de l'enveloppe du pneu, qui a pour rôle de maintenir les talons du pneu contre les rebords de la jante et de limiter l'affaissement du pneu en cas de crevaison.

En particulier, le Brevet français n° 2 419 188 décrit une pièce d'insertion toroïdale qui se compose:

- d'un noyau torique en matière cellulaire ou mousse, notamment en mousse de polyuréthane ou de polyéthylène,

- d'une corde de pneumatique radialement enroulée autour du noyau torique et de préférence composée d'un câble d'acier, et

- d'au moins un organe de support de la charge sur le pneumatique, réalisé à l'aide d'une corde de pneumatique, qui est également composée de préférence d'un câble d'acier et qui est enroulée circonférentiellement autour du tiers médian de la surface extérieure dudit noyau torique.

La préparation de cette pièce d'insertion est faite avant sa mise en place dans le pneumatique.

Quand le pneumatique est gonflé, ladite pièce d'insertion présente une partie centrale épaisse, sensiblement ovale, comprise entre les talons du pneumatique et deux parties extrêmes minces s'étendant le long d'à peu près la moitié de ses flancs, en sorte que, à l'état dégonflé, ladite partie centrale supporte la bande de roulement du pneumatique et la charge correspondante, tandis que les parties latérales supportent ces flancs.

On connaît encore une protection contre le dégonflement (cf. le Brevet français n° 2 396 664) constituée par un élément annulaire en matériau élastique, en particulier en caoutchouc naturel ou synthétique, qui présente une section transversale symétrique par rapport à un plan médian longitudinal, notamment en forme de H, composée de deux flancs opposés espacés et reliés par un pont annulaire (tout autour duquel sont ménagés des évents) qui définit ainsi des gorges annulaires à la partie supérieure et à la partie inférieure de l'élément annulaire.

Cet anneau éastique coopère avec un talon d'obturation annulaire, qui est composé d'une pluralité d'éléments d'obturation rigides, librement articulés dans le sens radial, et qui est par conséquent non flexible latéralement. Ce talon d'obturation est disposé dans la gorge ménagée à la partie inférieure de l'anneau, de façon à serrer ses flancs et les talons du pneumatique, rigidifiant ainsi cet anneau.

Toutefois, ces dispositifs de sécurité connus présentent tous l'inconvénient commun d'accroître de façon inacceptable le poids du pneu, du fait de leur coopération avec des moyens de renforcement lourds, et de nécessiter toujours, pour leur montage, un outillage spécial.

En outre, la distance minimale garantie que le pneumatique est capable de couvrir après crevaison, et la vitesse moyenne à laquelle on peut conduire le véhicule dans ces conditions, ne sont pas précisées dans les Brevets FR-2 419 188 et FR-2 396 664 décrits plus haut.

On connaît également la Demande de Brevet d'invention FR-A-2 085 827 (correspondant au préambule de la revendication), au nom de FIRESTONE, qui décrit un anneau de sécurité en matière élastique souple, notamment en mousse de polyuréthanne, constitué par une seule pièce pleine dont la section transversale présente une configuration symétrique, par rapport à un plan médian longitudinal, définie par une forme sensiblement en [ , à savoir par une gorge annulaire ménagée à la partie inférieure de l'anneau de sécurité.

Une quantité prédéterminée de lubrifiant est interposée entre l'anneau et le pneumatique.

Il est vrai que, à la différence des documents FR-2 419 188 et FR-2 396 664, le document FR-2 085 827 précise la distance minimale qu'un pneumatique sans chambre équipé d'un anneau de sécurité FIRESTONE peut couvrir après crevaison, ainsi que la vitesse moyenne à laquelle on peut conduire un véhicule automobile dans ces conditions. Toutefois, le document FIRESTONE - ainsi que les autres documents de l'Art antérieur décrit précédemment - n'indiquent pas les paramètres physiques, notamment l'encombrement, le poids et la rigidité des dispositifs de sécurité, capables d'assurer en combinaison, en cas de crevaison, le roulement sur une distance minimale garantie à une certaine vitesse moyenne.

En ce qui concerne l'encombrement radial, à savoir la hauteur de l'anneau de sécurité, on peut reconnaître que les figures du document FIRESTONE semblent illustrer un anneau dont la hauteur tomberait à l'intérieur de l'intervalle fermé proposé par la Demanderesse; toutefois, cette limitation dimensionnelle, de même que les extrêmes de l'intervalle susdit dans lequel peut varier la hauteur de l'anneau de sécurité selon l'invention n'ont pas été décrits, ni suggérés, dans le document FIRESTONE comme étant une condition essentielle pour atteindre le but visé.

De plus, la trop grande rigidité de la plupart des dispositifs de sécurité connus, due à la coopération d'éléments de nature différente, ce qui rend difficile le contrôle de sa valeur optimale pour les différentes applications, entraîne une déstabilisation de la conduite, alors que ceux de ces dispositifs qui sont en matière souple, alvéolaire notamment, ne permettent pas de maîtriser, dans toutes les conditions de roulage, les performances après crevaison et peuvent provoquer la perte de la bande de roulement du pneu du fait qu'ils n'assurent pas un contrôle suffisant de l'affaissement du pneu.

La présente invention a pour but de pourvoir à un dispositif de sécurité pour pneumatiques de véhicules qui répond mieux aux nécessités de la pratique que les dispositifs visant au même but connus antérieurement, notamment·

- en ce que son poids, sa géométrie et sa rigidité, ainsi que la dureté SHORE A de l'élastomère dont l'anneau torique du dispositif est composé, sont définis avec beaucoup de précision en fonction de tous les types de pneus sans chambre, du pneu de tourisme au pneu poids lourd;

- en ce qu'il peut être introduit dans le pneumatique non seulement à l'aide de machines spécialement conçues à cet effet, mais également manuellement, conformément à certaines dispositions de l'invention, ce qui permet d'éviter tout recours à un outillage spécial, simplifiant ainsi les opérations de montage du dispositif de sécurité et réduisant leur coût;

- en ce qu'il assure, aussi bien avant qu'après crevaison, une sécurité de conduite satisfaisante sans déstabilisation du véhicule, dans n'importe quelles conditions de roulage, et

- en ce que sa conception est telle qu'il rend pratiquement impossible, après crevaison, la perte de la bande de roulement du pneu.

La présente invention a pour objet un dispositif de sécurité pour pneumatiques sans chambre pour véhicules automobiles, du type comportant:

- un anneau torique de sécurité fixé à la jante, en particulier en élastomère ou plastomère, dont la section transversale présente une configuration symétrique par rapport à un plan médian longitudinal, obtenue notamment en ménageant circonférentiellement au moins une gorge annulaire au moins à la partie inférieure et/ou à la partie supérieure de cet anneau torique,

- particulièrement au moins un organe inextensible qui entoure circonférentiellement une portion de la face supérieure de l'anneau torique et qui est disposé circonférentiellement sur la surface radialement extérieure de l'anneau torique,

- notamment au moins une coupure radiale,

- une quantité prédéterminée de lubrifiant interposée entre l'anneau torique et le pneumatique, et

- une hauteur H' qui, tout en étant nécessairement inférieure à la hauteur intérieure H du pneu, est telle que:

$$\frac{H}{2} + 5\,\% \leq H' \leq \frac{H}{2} + 20\,\%,$$

caractérisé en ce que le dispositif de sécurité présente:

- une largeur L' au sommet de l'anneau qui, tout en étant nécessairement inférieure à la largeur L de la jante, est telle que:

$$L - 3e \leq L' \leq L - e,$$

où $e$ est l'épaisseur du talon du pneu, en ce que sa rigidité R est telle que:

$$750 \text{ kg/cm} \leq R \leq 1050 \text{ kg/cm},$$

et en ce que son poids, exprimé en pourcentage du poids du pneu, et sa dureté SHORE A se correspondent de façon telle que, quand cette dernière est comprise entre 70 et 80, le poids est compris entre 60 et 70 % environ du poids du pneu.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels:

- la figure 1 représente de façon schématique le dimensionnement conforme à l'invention, du dispositif de sécurité par rapport au pneumatique dans lequel il est monté,

- la figure 2 est une vue en coupe transversale d'un mode de réalisation du dispositif de sécurité qui ne comporte pas de coupure(s) radiale(s), conformément à l'invention: les figures 2a et 2b représentent deux formes possibles d'au moins une gorge, ou évidement, ménagée à sa partie inférieure,

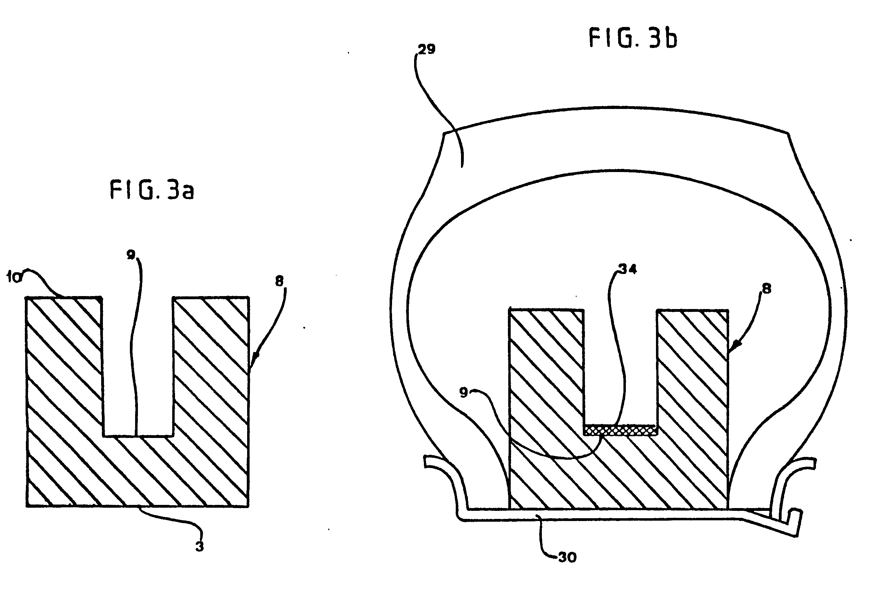

- les figures 3 à 7 sont des vues en coupe transversale d'autres modes de réalisation du dispositif de sécurité qui peuvent comporter ou non une coupure radiale, conformément à l'invention, et coopérer avec au moins un organe inextensible de blocage disposé dans au moins une gorge ménagée à la partie supérieure; en particulier, les figures 3a à 7a sont des vues en coupe dudit dispositif avant son montage dans le pneumatique, tandis que les figures 3b à 7b, sont des vues en coupe de ce dispositif monté sur jante dans le pneumatique, et coopérant avec ledit organe de blocage dans le cas où il est pourvu de ladite coupure radiale,

- la figure 8 est une vue en coupe longitudinale de trois variantes de réalisation d'un anneau torique que comprend le dispositif de sécurité conforme à l'invention; la variante A représente un anneau torique comportant une coupure radiale, tandis que la variante B représente un anneau torique comportant deux coupures radiales diamétralement opposées et la variante C représente un anneau torique comportant trois coupures radiales.

- la figure 9 représente schématiquement le processus d'introduction d'un anneau torique selon la variante A de la figure 8, dans une enveloppe de pneumatique "tubeless",

- la figure 10 est une vue en coupe longitudinale d'un pneumatique équipé du dispositif de sécurité conforme à l'invention, monté sur jante et bloqué au moyen d'une sangle,

- la figure 11 est une vue partielle d'un anneau torique pourvu d'un organe de blocage constitué par une goupille, la figure 11 A représentant ledit organe de blocage en une vue en coupe longitudinale et la figure 11 B le représentant en vue de dessus,

- la figure 12 est une représentation analogue à celle de la figure 11, dans laquelle l'anneau torique est bloqué en forme au moyen de deux goupilles, la figure 12 A étant une vue en coupe longitudinale et la figure 12 B une vue de dessus,

- la figure 13 est une vue en coupe transversale d'un dispositif de sécurité pour pneumatique de véhicule conforme à l'invention monté sur jante, pourvu sur sa face supérieure d'une couche antifriction mise en place selon deux variantes de réalisation a et b,

- la figure 14 représente trois variantes de réalisation (a, b, c) d'allègements supplémentaires du dispositif de sécurité conforme à l'invention, en coupe transversale, tandis que

- la figure 15 est une vue en coupe longitudinale de ces trois variantes de réalisation,

- les figures 16 et 17 représentent, en coupe transversale, le montage de la valve de gonflage en association avec le dispositif de sécurité et

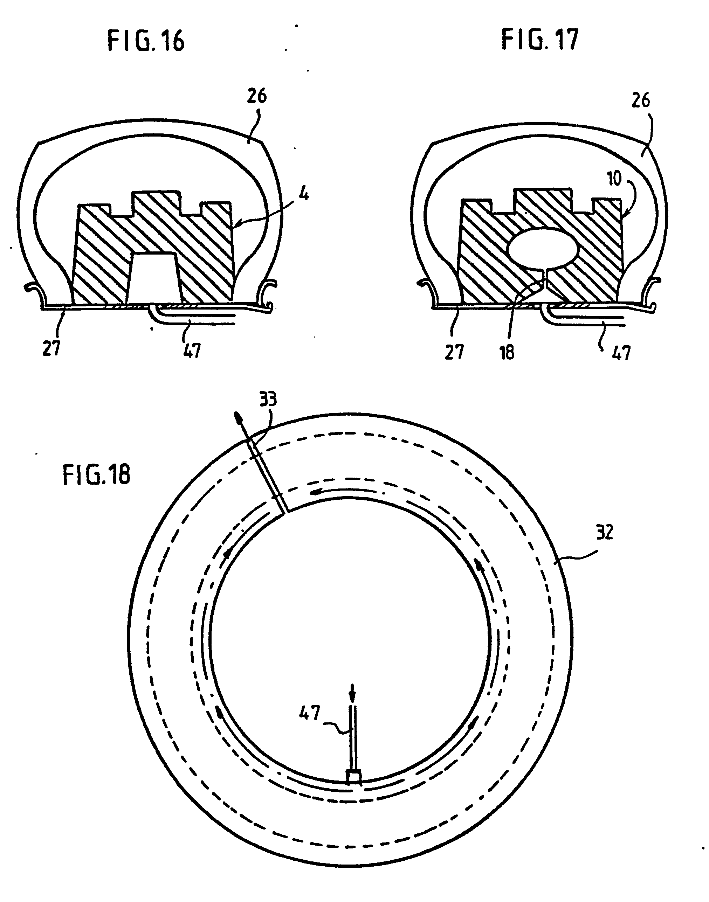

- la figure 16 représente une vue en coupe longitudinale du dispositif de sécurité conforme à l'invention, montrant le cheminement du gaz de gonflage dans ce dernier pour assurer le gonflage du pneumatique.

Il doit être bien entendu, toutefois, que ces dessins et les parties descriptives correspondantes, sont donnés uniquement à titre d'illustration de l'objet de l'invention, dont ils ne constituent en aucune manière une limitation.

Le dispositif de sécurité pour pneumatique de véhicule, conforme à l'invention, est constitué par un anneau torique présentant des dimensions qui, en combinaison avec d'autres caractéristiques, à savoir sa rigidité, son poids, exprimé en pourcentage du poids du pneumatique, et sa dureté SHORE A, assurent un affaissement limité du pneumatique, en cas de crevaison, dans des conditions qui permettent un roulage avec un ou deux pneus crevés et, par suite, dégonflés, sur des distances relativement importantes, sans perte de la bande de roulement du pneumatique, avec une bonne adhérence au sol et une réelle sécurité de conduite dans tous les cas de perforation du pneumatique.

En particulier, il s'est avéré que, pour que la sécurité de conduite soit assurée dans tous les cas de perforation du pneumatique, sur une distance minimale de 50 km à une vitesse de 50 km/h, et pour éviter que le pneumatique ne perde sa bande de roulement dans de telles conditions de roulage, le dispositif de sécurité doit présenter, en combinaison, les caractéristiques indiquées ci-après, qui paraissent constituer des conditions critiques.

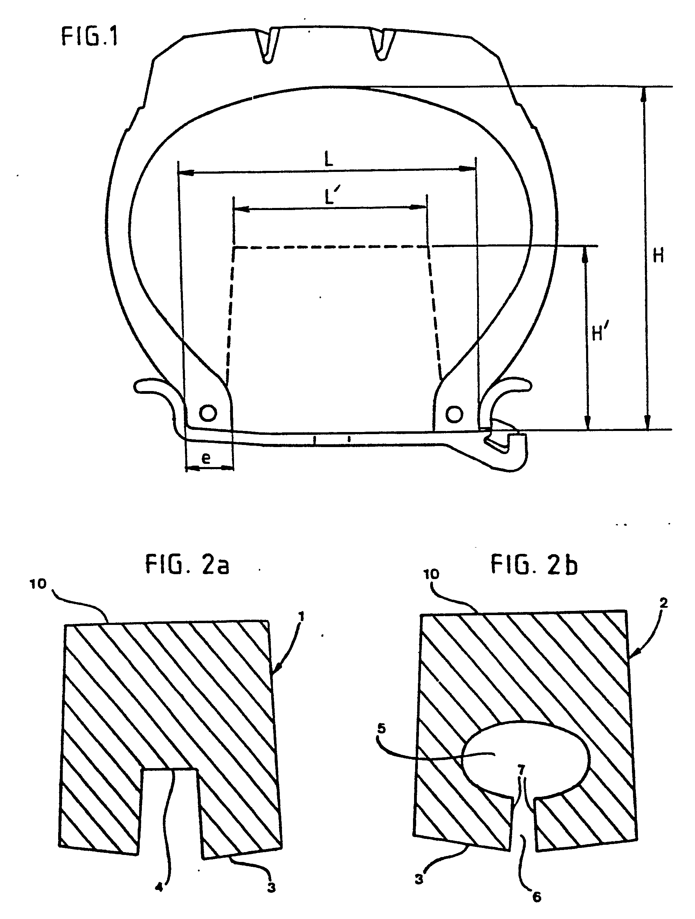

C'est ainsi que la hauteur du dispositif de sécurité conforme à l'invention, par rapport à la hauteur intérieure du pneumatique, doit être telle que (cf. figure 1):

$$\tfrac{H}{2} + 5\,\% \leqslant H' \leqslant \tfrac{H}{2} + 20\,\%,$$

où H est la hauteur intérieure du pneu et H' la hauteur du dispositif de sécurité.

De même la largeur au sommet du dispositif de sécurité conforme à l'invention doit se trouver dans la relation suivante, par rapport à la largeur de la jante de la roue et à l'épaisseur d'un talon du pneumatique (cf. fig. 1):

$$L - 3e \leqslant L' \leqslant L - e,$$

où L est la largeur de la jante, et l'épaisseur d'un talon et L' la largeur du sommet du dispositif de sécurité.

De telles caractéristiques de dimensions ont pour effet d'empêcher le pneumatique de s'affaisser de plus de la moitié de sa hauteur intérieure et elles ont pour effet de limiter le débattement du pneumatique, ce qui permet d'assurer une bonne tenue du véhicule dans les virages, même avec des pneus dégonflés par perforation.

Il s'est d'autre part avéré qu'un véhicule équipé de pneumatiques pourvus de dispositifs de sécurité connus dans l'Art antérieur est difficile à diriger en raison de la trop grande rigidité de ces derniers. Les recherches effectuées par la Demanderesse pour éliminer cette trop grande rigidité, préjudiciable à la sécurité de direction et de conduite, l'ont amenée à déterminer que la rigidité R du dispositif de sécurité conforme à l'invention - c'est-à-dire la valeur de la pente de la courbe "charge" (exprimée en kg) - en fonction de l'"écrasement sous charge" (exprimé en cm) - doit être telle que:

$$750 \leqslant R \leqslant 1050 \text{ kg/cm},$$

ce qui signifie que le dispositif de sécurité doit être semi-rigide, soit en le réalisant en un matériau souple compact, soit/et en créant des zones de flexion dans le dispositif, comme c'est le cas grâce aux évidements ou gorges que comporte le dispositif conforme à l'invention et qui seront décrits plus loin.

Il est en outre avantageux de réaliser l'anneau torique en un élastomère dont la dureté SHORE A est comprise entre 70 et 80 quand le poids du dispositif de sécurité conforme à l'invention est compris entre:

$$0,6 \times P \leqslant P' \leqslant 0,7 \, P$$

où P est le poids du pneu et P' le poids du dispositif de sécurité.

La limitation du poids du dispositif de sécurité conforme à l'invention, à 60-70 % du poids du pneumatique a pour conséquence d'éliminer le risque de balourd lorsque le pneumatique est utilisé à l'état gonflé, risque que l'on rencontre avec la plupart des dispositifs de sécurité connus dans l'Art antérieur.

Le dispositif de sécurité pour pneumatiques de véhicules conforme à la présente invention peut, en raison des caractéristiques de dimensions et de rigidité, ainsi que de poids et de dureté, qui viennent d'être énoncées, être adapté à n'importe quel type de pneus "tubeless", du pneu tourisme au pneu poids lourd, ce qui constitue un avantage important puisque son utilisation peut ainsi s'étendre à toute la gamme des véhicules, qu'il s'agisse des automobiles de tourisme, des camions de gros tonnage, des tracteurs ou même des engins blindés à usage militaire.

Les anneaux toriques 1 et 2 représentés aux figures 2a et 2b sont pourvus, à la partie inférieure 3, d'une gorge 4, ayant une forme sensiblement en U inversé, et d'un évidement qui a sensiblement la forme d'un trou de serrure, respectivement, cet évidement étant constitué par une partie 5 en forme de bulle, associée à une fente 6 ouverte.

Il est avantageux de réaliser les parois 7 de cette fente 6 biseautées pour délimiter un passage de cheminement de l'air de gonflage, selon des modalités qui seront décrites plus loin (cf. la description des figures 16 et 17).

L'anneau torique 6, représenté à la figure 3a, est pourvu, à la différence des anneaux 1 et 2, d'une gorge 9, ménagée à la partie supérieure 10, ayant une forme sensiblement en U.

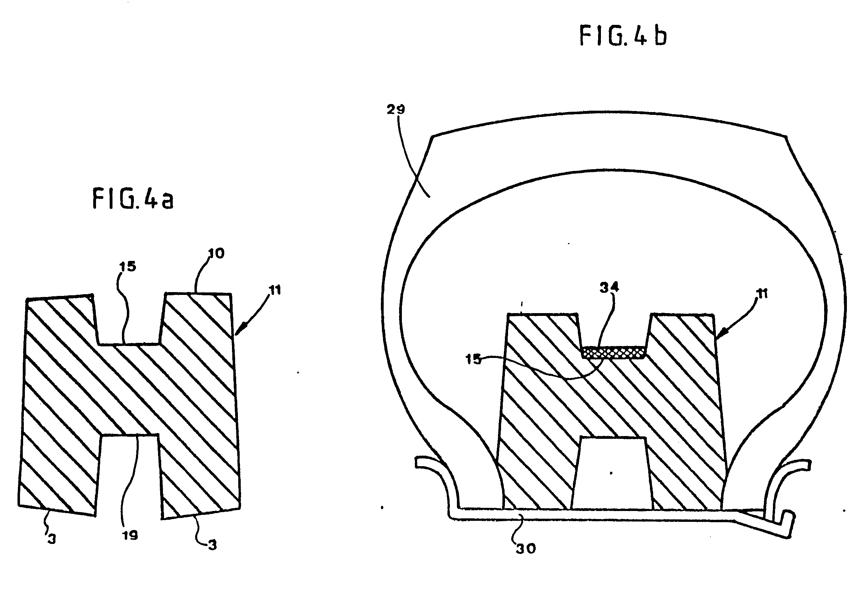

Les figures 4a à 7a représentent, en outre, des anneaux 11, 12, 13 et 14 pourvus à la fois à leur partie supérieure 10 et à leur partie inférieure 3, respectivement, au moins d'une gorge 15, 16, 17 et 18, sensiblement en forme de U, et d'une gorge 19, 20 sensiblement en forme de U inversé ou d'un évidement sensiblement en forme de trou de serrure, chaque évidement comportant également dans ce cas, une bulle 21, 22, et une fente 23, 24.

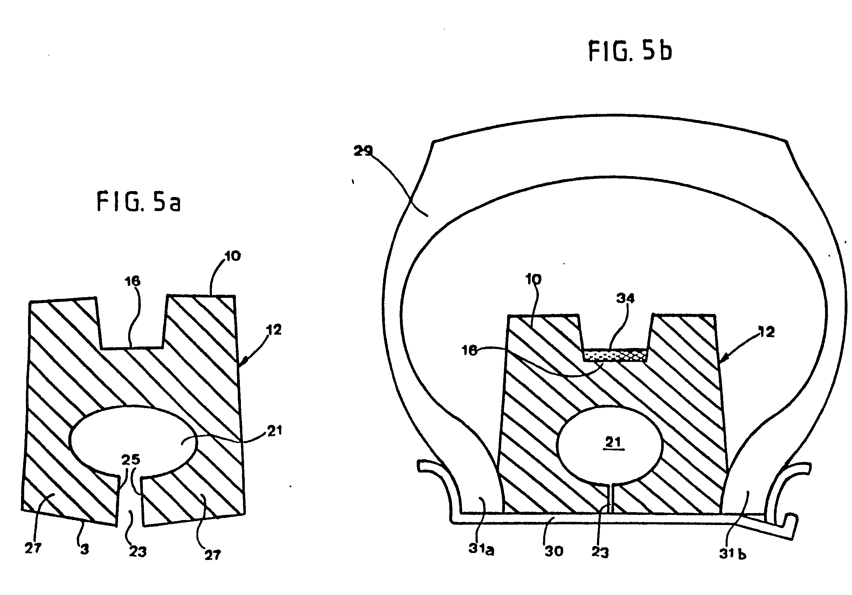

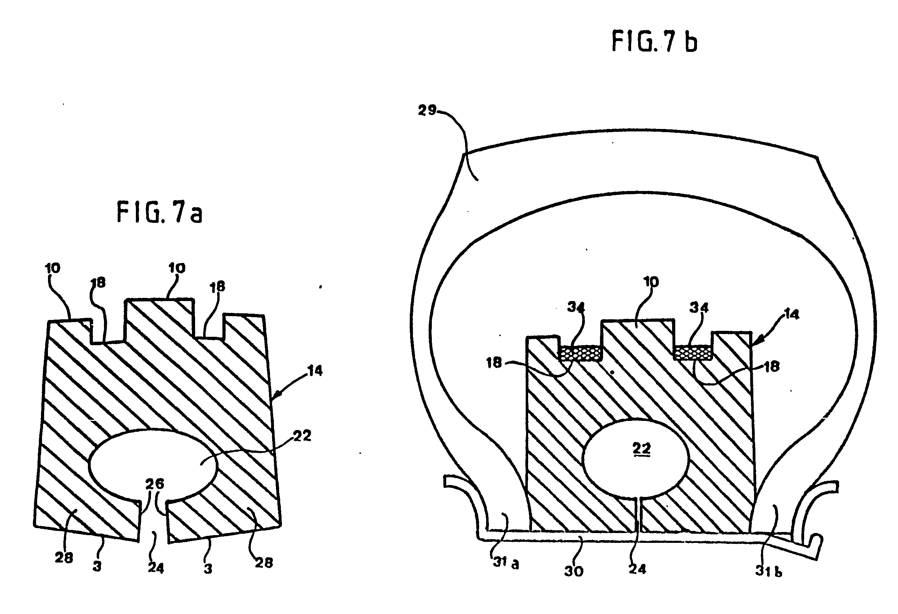

Ce qui a été dit au sujet de l'opportunité de biseauter les parois de la fente 6 de l'évidement de la figure 2b reste valable également pour les parois 25 et 26 des fentes 23 et 24 des évidements des figures 5 et 7.

En ce qui concerne les figures 2, 5 et 7, il y a lieu de remarquer que dans chaque cas, la fente 6, 23, 24 est délimitée par deux talons 27 et 26 qui, après montage du pneumatique 29 sur la jante 30 de la roue du véhicule, se touchent, ce qui permet d'avoir un meilleur serrage des talons 31a et 31b du pneumatique 29 sur ladite jante 30.

En outre, la partie inférieure 3 des anneaux toriques 1, 2, 12, 13, 14 et 15 présente une légère conicité, de l'ordre de 10°, par rapport à l'horizontale, pour assurer un serrage sûr et inamovible des talons 31a et 31b du pneumatique 29, après montage de ce dernier sur la jante 30 de la roue du véhicule. Dans les modes de réalisation représentés aux figures 5 et 7, ainsi qu'à la figure 2b, cet effet de serrage est renforcé par l'effet de serrage des talons 31a et 31b du pneumatique 29 après montage de ce dernier sur ladite jante 30, comme le montrent les figures 4b à 7b.

En ce qui concerne le mode de réalisation représenté à la figure 3a, qui ne comporte pas de gorge ou évidement à la partie inférieure 3 de l'anneau 6, la conicité de cette dernière est limitée à un biseautage (non représenté) ménagé sur les bords latéraux inférieurs de cet anneau 6.

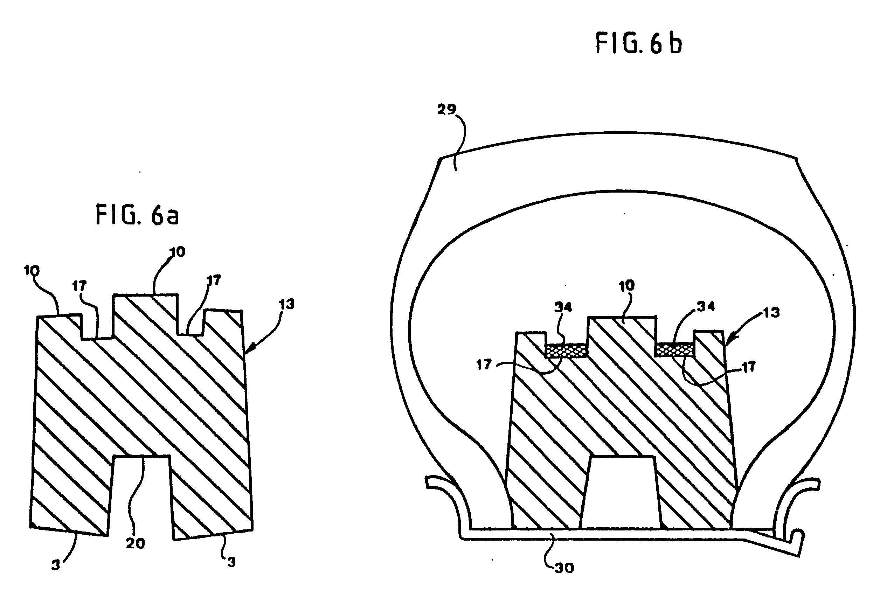

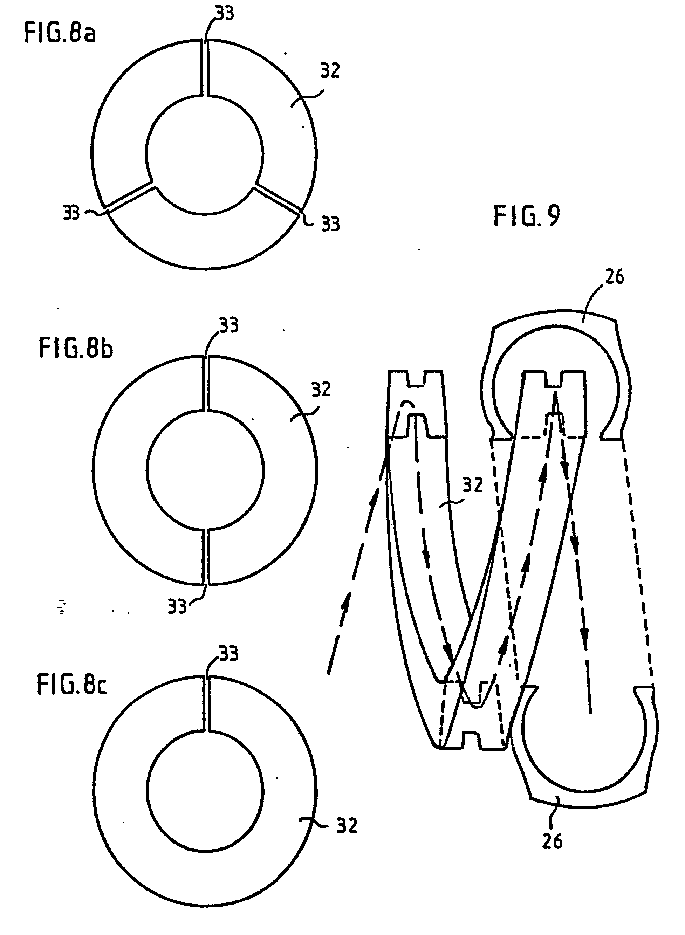

Alors que le mode de réalisation sans gorge à la partie supérieure, représenté aux figures 2a et 2b, est destiné à être monté tel quel dans le pneumatique 29, l'anneau torique, qui par la suite sera désigné d'une façon générale par la référence 32, peut comporter, quels que soient ses modes de réalisation comportant au moins une gorge supérieure (cf. les figures 3 à 7), une ou plusieurs coupures radiales 33 (cf. les figures 8A, 8B, 8C), dont le rôle sera précisé plus loin: dans ce cas, les gorges supérieures 9 (cf. la figure 3), 15 (cf. la figure 4), 16 (cf. la figure 5), 17 (cf. la figure 6) et 16 (cf. la figure 7) sont destinées à loger (sauf si les dimensions de l'anneau torique sont petites), chacune, une sangle 34 réalisée en un matériau inextensible; ces sangles ont pour rôle de maintenir l'anneau torique définitivement en forme dans le pneumatique 29 et de le bloquer dans celui-ci après son introduction dans ledit pneumatique, suivant un processus qui sera décrit plus loin.

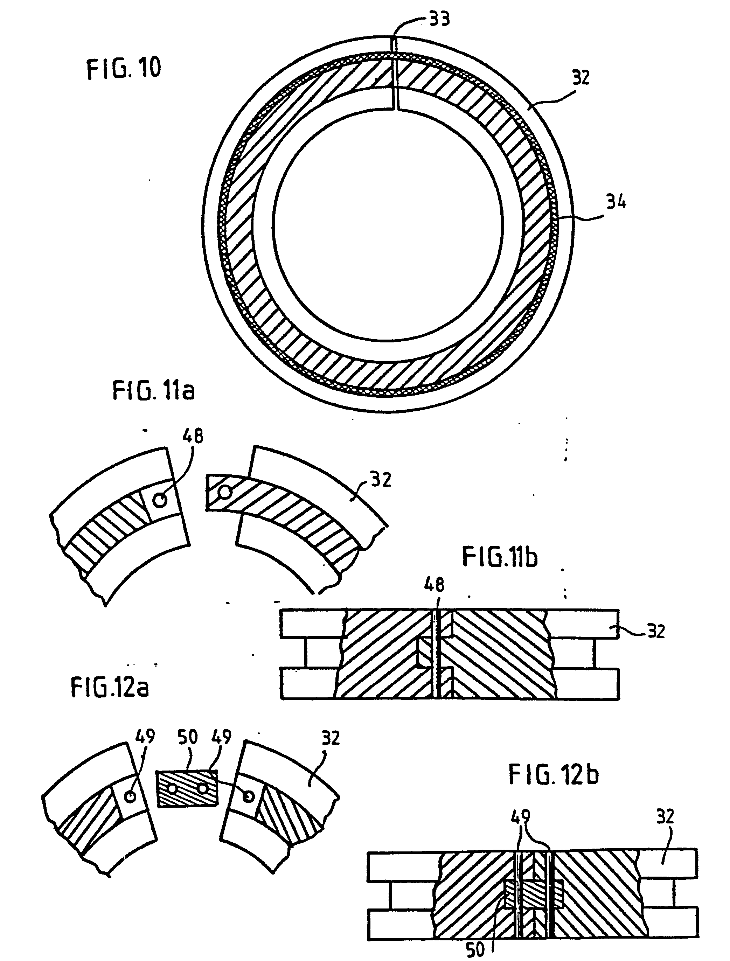

Le blocage de l'anneau torique 32 en position dans le pneumatique peut être également réalisé par d'autres moyens, tels que ceux représentés aux figures 11 et 12.

La figure 11 représente le blocage de l'anneau torique dans sa forme torique au moyen d'une goupille de blocage 48 montée au niveau de la ou des coupures radiales 33, alors que la figure 12 représente le blocage de l'anneau torique 32 dans sa forme torique au moyen d'une goupille de blocage 49 avec interposition d'une pièce de liaison 50.

Il peut également être avantageux de combiner les moyens de blocage décrits plus haut, en utilisant pour le blocage de l'anneau torique, à la fois une sangle 34 et une goupille de blocage 48 ou un dispositif de blocage comprenant deux goupilles 49 et une pièce de liaison 50. Il va de soi que tous autres moyens de blocage équivalents peuvent être utilisés pour maintenir l'anneau torique dans sa forme torique dans le pneumatique, tout en demeurant dans le cadre de l'invention.

La face supérieure de l'anneau torique peut, en outre, avantageusement être pourvue d'un revêtement antifriction, réduisant le frottement entre cet anneau et le pneumatique, qui peut être en élastomère ou plastomère spécial ou en toute autre matière ayant de bonnes caractéristiques d'antifriction, telle que matière plastique, notamment du polytétrafluoroéthylène, ou métallique, ou encore du polytétrafluoroéthylène adhérisé sur alliage métallique.

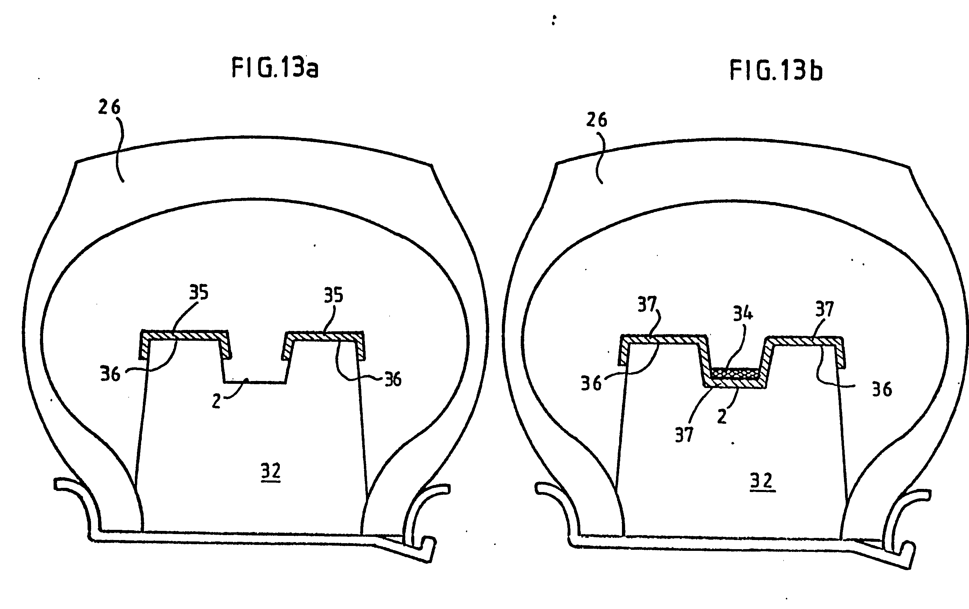

Conformément à la figure 13a, un revêtement antifriction 35 est fixé à la face supérieure 36 de l'anneau torique 32 par tous moyens appropriés tels que collage ou vulcanisation, par exemple.

Conformément à la figure 13b, le revêtement antifriction 37 est appliqué non seulement sur la face supérieure 36 de l'annéau torique 32 mais également sur le fond et les parois latérales de la gorge 2a ménagée sur ladite face supérieure 36; la fixation de ce revêtement 37 peut être réalisée par collage ou vulcanisation, mais elle peut également l'être par serrage au moyen de la sangle 33 logée dans la gorge 2a.

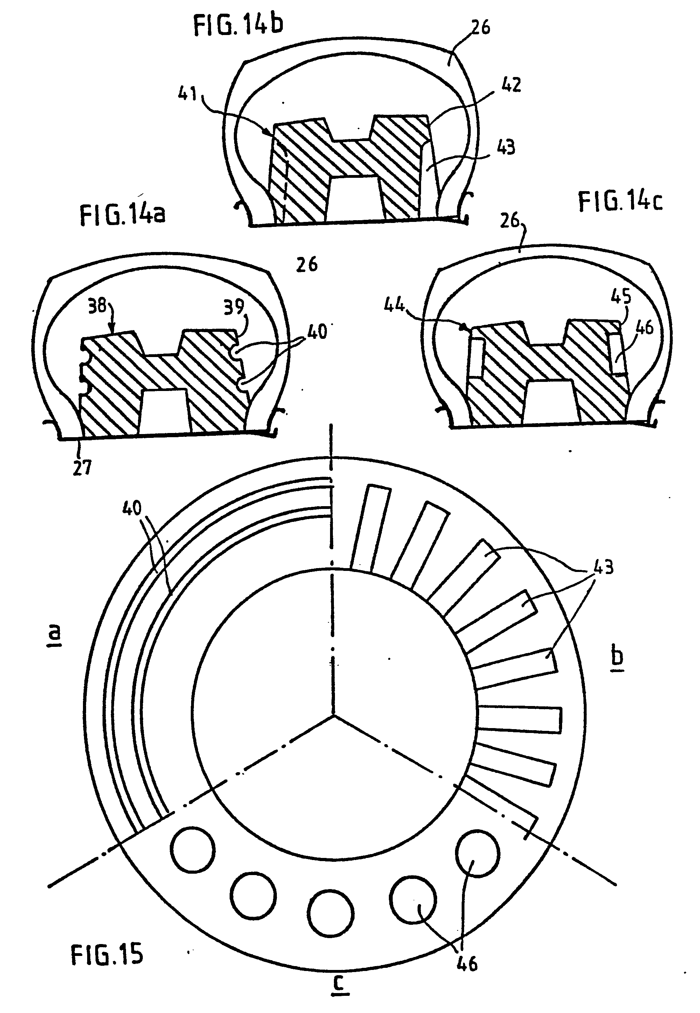

Comme on l'a dit plus haut, les gorges ou évidements ménagés à la partie inférieure de l'anneau torique du dispositif de sécurité conforme à l'invention ont essentiellement pour rôle d'alléger le poids du dispositif de sécurité. Il peut s'avérer avantageux de diminuer plus encore le poids du dispositif de sécurité; dans ce but, les parois latérales de celui-ci peuvent comporter des évidements supplémentaires présentant toutes formes appropriées telles que, par exemple, la forme de cannelures longitudinales 40 pratiquées dans les parois latérales 39 de l'anneau torique 38 (cf. figures 14a et 15a) ou celle de créneaux radiaux 43 pratiqués dans les parois latérales 42 de l'anneau torique 41 (cf. figures 14b et 15b) ou celle de lamages cylindriques 46 pratiqués dans les parois latérales 45 de l'anneau torique 44 (cf. figures 14c et 15c).

Dans le cas de dispositifs ne comportant pas de coupure radiale, il peut être avantageux de renforcer la partie inférieure de l'anneau torique, en particulier dans deux de ses modes de réalisation qui comportent des talons 31a et 31b (cf. figures 5 et 7), soit en réalisant ladite partie inférieure en un plastomère plus dur, soit en y noyant une ou plusieurs tringles. En effet, il est nécessaire que l'élongation du diamètre interne du dispositif de sécurité soit limitée à 5 % sous une contrainte de traction de 10 daN/cm$^2$ et que la pression d'appui qu'exerce le dispositif de sécurité conforme à l'invention simultanément sur la jante et sur les talons du pneu soit équivalente à une pression normale d'utilisation avant crevaison, aussi bien dans le cas de dispositifs comportant une coupure radiale que dans le cas de dispositifs ne comportant pas ladite coupure radiale. La nécessité de respecter ces deux conditions peut donc conduire à renforcer la partie inférieure du dispositif de sécurité comme indiqué plus haut.

Ainsi qu'il a été mentionné plus haut, la face supérieure de l'anneau torique que comporte le dispositif de sécurité conforme à l'invention peut avantageusement être pourvue d'un revêtement antifriction qui a pour effet de réduire l'échauffement dû au frottement de la face inférieure du pneumatique sur le dispositif de sécurité conforme à l'invention.

Un autre moyen propre à réduire l'échauffement dû au frottement du pneumatique sur le dispositif de sécurité, qui peut être utilisé soit seul, soit conjointement avec la disposition du revêtement antifriction sur la face supérieure du dispositif de sécurité, est constitué par l'introduction d'une quantité déterminée de lubrifiant entre le pneumatique et le dispositif de sécurité, lors de l'opération de montage de ce dernier dans le pneumatique. Ce lubrifiant est ajouté à raison d'une quantité Q qui est fonction de la charge du pneu et qui est calculée à l'aide de la formule suivante:

Q = charge sur pneu x 0,10

où la charge est exprimée en kg et la quantité de lubrifiant en g.

Il est avantageux d'utiliser un lubrifiant dont la viscosité n'est pas inférieure à 500 centipoises et est avantageusement comprise entre 500 et 600 centipoises. Parmi les lubrifiants appropriés utilisables dans le cadre de l'invention, on peut citer, à titre d'exemple, l'huile de silicone type 47 V 500.

Le dispositif de sécurité pour pneumatiques de véhicules conforme à la présente invention peut être introduit dans le pneumatique sans nécessiter le recours à une machine de montage spéciale et coûteuse: en effet, le fait que l'anneau torique (cf. figures 8a, 8b, 8c) comporte, conformément à l'invention, au moins une coupure radiale, et le fait qu'il soit réalisé en matériau élastique relativement souple et donc déformable, du type de l'élastomère mentionné plus haut, permettent de l'introduire dans le pneumatique 29 comme représenté à la figure 9, en lui faisant subir manuellement une rotation à la façon d'une vis. Après son introduction dans le pneumatique, l'anneau 32 reprend sa forme torique. On le bloque alors en position dans le pneumatique, en mettant en place un ou plusieurs organes de blocage qui seront décrits plus loin. L'organe de blocage de l'anneau torique en position dans le pneumatique peut être constitué par une ou plusieurs sangles 34 inextensibles introduites dans les logements prévus à cet effet dans l'anneau torique 32, comme le montrent les figures 4b et 7b et la figure 10. Les sangles inextensibles 34 utilisées dans le cadre de l'invention peuvent être des courroies fermées, c'est-à-dire sans fin, auquel cas l'anneau torique doit être déformé à l'aide d'un outillage à main approprié pour permettre la mise en place desdites courroies dans leurs logements. On peut également utiliser des sangles 34 équipées d'un dispositif de fermeture du type à boucle ou à pince auto-serrante, auquel cas l'opération d'introduction du dispositif de sécurité dans le pneumatique se fait manuellement sans même devoir recourir à un outillage à main.

Le dispositif de sécurité conforme à l'invention, grâce à la coupure radiale 33 que comporte l'anneau torique qu'il comprend, a en outre pour effet de faciliter le gonflage du pneumatique dans lequel il est inclus, par une meilleure répartition du gaz de gonflage dans ce dernier, comme le montrent les figures 16 à 18.

La figure 16 montre l'association de la valve de gonflage 47 avec un dispositif de sécurité du type de celui représenté à la figure 6, tandis que la figure 17 montre l'association de la valve de gonflage 47 avec un dispositif de sécurité du type représenté à la figure 7. Le gaz de gonflage introduit au moyen de la valve de gonflage 47 chemine dans le dispositif de sécurité 32 jusqu'à la coupure radiale 33 d'où il s'échappe dans le pneumatique 29. L'entrée du gaz de gonflage dans le dispositif représenté à la figure 17 est facilitée par le biseautage des parois de la gorge inférieure ménagée dans l'anneau torique qui délimitent un espace pendant le passage du gaz de gonflage dans le dispositif de sécurité.

Il va de soi que, dans le cas d'absence de ladite coupure radiale 33, le gonflage du pneumatique 29 se fait par l'intermédiaire de tout moyen connu en soi, notamment par l'intermédiaire d'un canal qui traverse l'anneau torique 32, à la façon décrite, par exemple, dans le Brevet français n° 82 00607, au nom de la Demanderesse. Dans le cas d'absence simultanée de coupure radiale et de gorge inférieure, ledit canal traversant peut coopérer avantageusement avec une gorge annulaire ménagée sur la périphérie de de l'anneau torique, comme décrit dans ledit Brevet français n° 82 00607.

Ainsi que cela ressort de ce qui précède, l'invention ne se limite nullement à ceux de ses modes de mise en oeuvre, de réalisation et d'application qui viennent d'être décrits de façon plus explicite.

**Revendication**

Dispositif de sécurité pour pneumatiques sans chambre (29) pour véhicules automobiles, du type comportant:
- un anneau torique de sécurité (1, 2, 8, 11-14, 32, 38, 41, 44) fixé à la jante (30), en particulier en élastomère ou plastomère, dont la section transversale présente une configuration symétrique par rapport à un plan médian longitudinal, obtenue notamment en ménageant circonférentiellement au moins une gorge annulaire (9, 15-18, 2a) au moins à la partie inférieure et/ou à la partie supérieure de cet anneau torique,
- particulièrement au moins un organe inextensible (34) qui entoure circonférentiellement une portion de la face supérieure de l'anneau torique et qui est disposé circonférentiellement sur la surface radialement extérieure de l'anneau torique, ledit anneau torique comprenant
- notamment au moins une coupure radiale (33),
- une quantité prédéterminée de lubrifiant interposée entre l'anneau torique et le pneumatique (29), et
- une hauteur H' qui, tout en étant nécessairement inférieure à la hauteur intérieure H du pneu, est telle que:

$$\frac{H}{2} + 5\,\% \leq H' \leq \frac{H}{2} + 20\,\%,$$

caractérisé en ce que le dispositif de sécurité présente:

- une largeur L' au sommet de l'anneau qui, tout en étant nécessairement inférieure à la largeur L de la jante, est telle que:

$$L - 3e \leq L' \leq L - e,$$

où e est l'épaisseur du talon du pneu, en ce que sa rigidité R est telle que:

$$750\ kg/cm \leq R \leq 1050\ kg/cm,$$

et en ce que son poids, exprimé en pourcentage du poids du pneu (29), et sa dureté SHORE A se correspondent de façon telle que, quand cette dernière est comprise entre 70 et 80, le poids est compris entre 60 et 70 % environ du poids du pneu (29).

**Patentansprüche**

Sicherheitsvorrichtung für schlauchlose Kraftfahrzeugreifen (29) mit:
- einem auf der Felge (30) befestigten Sicherheitsring (1, 2, 8, 11-14, 32, 38, 41, 44), insbesondere aus einem Elastomer oder Plastomer, dessen, Querschnitt bezüglich einer Mittellängsebene eine symmetrische Gestalt aufweist, die insbesondere durch Aussparen wenigstens einer ringförmigen Nut (9, 15-18, 2a) in Umfangsrichtung wenigstens in dem unteren Teil und/oder dem oberen Teil dieses Ringes erhalten wurde,
- insbesondere wenigstens einem nichtausdehnbaren Organ (34), das einen Teil der Oberseite des Ringes in Umfangsrichtung umschließt und das in Umfangsrichtung auf der radialen Außenseite des Ringes angeordnet ist, wobei der Ring versehen ist mit
- insbesondere wenigstens einem radialen Einschnitt (33),
- einer vorherbestimmten Schmiermittelmenge, die zwischen dem Ring und dem Reifen (29) eingebracht ist, und
- einer Höhe H', die notwendigerweise kleiner als die Höhe des Reifens ist und für die gilt:

$$\frac{H}{2} + 5\,\% \leq H' \leq \frac{H}{2} + 20\,\%,$$

dadurch gekennzeichnet, daß die Sicherheitsvorrichtung am Scheitel des Ringes eine Breite L' aufweist, die notwendigerweise kleiner als die Breite L der Felge ist und für die gilt:

$$L - 3e \leq L' \leq L - e,$$

wobei e die Stärke der Reifenwulst ist, daß für die Steifigkeit g gilt:

$$750\ kg/cm \leq R \leq 1050\ kg/cm,$$

und daß ihr Gewicht ausgedrückt in Gewichtsprozenten, des Reifens (29) und ihre A-Shorehärte in der Weise einander zugeordnet sind, daß, wenn die letztere zwischen 70 und 80 liegt, das Gewicht zwischen ungefähr 60 und 70 % des Gewichtes des Reifens (29) beträgt.

## Claim

A safety device for tubeless tyres (29) for motor vehicles, of the type comprising:
- a toric safety ring (1, 2, 8, 11-14, 32, 38, 41, 44) fixed to the rim (30), made more particularly from elastomer or plastomer, whose cross section has a symmetrical configuration with respect to a median longitudinal plane, obtained more particularly by providing circumferentially at least one annular groove (9, 15-18, 2a) at least at the lower part and/or at the upper part of this toric ring, particularly at least one inextensible member (34) which circumferentially surrounds a portion of the upper face of the toric ring and which is disposed circumferentially on the radially external surface of the toric ring, said toric ring comprising
- more particularly at least one radial cut (33),
- a predetermined amount of lubricant interposed between the toric ring and the tyre (29), and
- a height H′ which, while being necessarily less than the internal height H of the tyre, is such that:

$$\frac{H}{2} + 5\,\% \leq H' \leq \frac{H}{2} + 20\,\%,$$

characterized in that the safety device has:
- a width L′ at the top of the ring which, while being necessarily less than the width L of the rim, is such that:

$$L - 3e \leq L' \leq L - e$$

where e is the thickness of the bead of the tyre,
in that its rigidity R is such that:

$$750\ \text{kg/cm} \leq R \leq 1050\ \text{kg/cm}$$

and in that its weight, expressed as a percentage of the weight of the tyre (29) and its SHORE A hardness correspond so that, when this latter is between 70 and 80, the weight is between about 60 and 70 % of the weight of the tyre (29).

FIG.1

FIG. 2a

FIG. 2b

FIG. 3b

FIG. 3a

FIG. 4 b

FIG. 4 a

29

15 10

11

34

15 11

3 19 3

30

0 104 977

FIG. 5b

FIG. 5a

FIG. 6 b

FIG. 6a

0 104 977

FIG.7 b

FIG.7 a

FIG.8a

33

32

33

33

FIG. 9

FIG.8b

33

32

33

26

32

FIG.8c

33

32

26

FIG. 10

FIG. 11a

FIG.11b

FIG.12a

FIG. 12b

FIG.13a

FIG.13b

0 104 977

FIG. 14b

FIG. 14a

FIG. 14c

FIG. 15

19

FIG. 16

FIG. 17

FIG. 18